# EUROPEAN PATENT SPECIFICATION

(11) **EP 3 338 578 B1**
(45) Date of publication and mention of the grant of the patent: **13.11.2019**
(21) Application number: 17209872.5
(22) Date of filing: 21.12.2017
(51) Int. Cl.: A43B 5/04, A43B 13/04, A43B 13/22, B29D 35/02, B29D 35/12

(54) **SKI-BOOT PRODUCTION METHOD**
SKISCHUHHERSTELLUNGSVERFAHREN
PROCÉDÉ DE PRODUCTION DE CHAUSSURE DE SKI

(30) Priority: 21.12.2016 IT 201600129601
(43) Date of publication of application: 27.06.2018
(73) Proprietor: Calzaturificio S.C.A.R.P.A. S.p.A., 31011 Asolo (IT)
(72) Inventor: PARISOTTO, Davide, 31010 Casella D'Asolo (IT)
(74) Representative: Bellemo, Matteo

(56) References cited:
- EP-A1- 1 559 457
- EP-A1- 2 881 004
- EP-A1- 3 053 469
- WO-A1-2013/168110
- WO-A1-2016/075621
- AT-B- 350 434
- US-A1- 2013 318 835

## Description

The present invention relates to a ski-boot production method.

More in detail, the present invention relates to a production method of ski boot for ski mountaineering, to which the following description will make explicit reference without however losing in generality.

As is known, most of the ski boots for ski-mountaineering, see e.g. EP 3 053 469 A1, comprise: a rigid shell made of plastic material, which is substantially shoe-shaped so as to accommodate the foot of the user, and has the lower part specifically structured for being fastened onto the back of a downhill ski or similar by means of a special ski-binding device; a rigid cuff made of plastic material, which is shaped so as to embrace the lower part of the leg of the user from behind, and is hinged onto the upper part of the shell, so as to be able to rotate about a transversal reference axis which is perpendicular to the midplane of the boot and locally substantially coincides with the articulation axis of the ankle; and an inner-boot made of soft thermal-insulating material, which is inserted into the shell and cuff and is shaped so as to accommodate and protect both the foot and the lower part of the leg of the user.

The abovementioned ski-mountaineering boots are also provided with a shell closing mechanism and a cuff closing mechanism, both manually operated. The shell closing mechanism is structured so as to be able to selectively close/tighten the shell on the foot of the user, thus to immobilize the foot of the user inside the shoe. The cuff closing mechanism, in turn, is structured so as to be able to selectively close/tighten the upper part of the cuff on the leg of the user, thus to immobilize the leg of the user inside the shoe.

Moreover, in ski-mountaineering boots the lower part of the shell additionally has a treaded profile and is made of vulcanized rubber or another elastomeric material with a high coefficient of friction, so as to grip on the snow or ice and thus allow the user to nearly safety walk on snow and ice.

More in detail, the shell of the ski-mountaineering boots is usually made up of a substantially basin-shaped rigid casing which is shaped so as to accommodate and cover the foot of the user approximately up to the height of the ankle, and is made of plastic material via injection molding; and a plate-like sole which is made of vulcanized rubber or another similar elastomeric material with a high coefficient of friction, and which is attached directly to the bottom wall of the casing by gluing.

Additionally, the shell of the ski-mountaineering boots is moreover provided with a rigid front insert with a plate-like structure, which is made of metal material, is embedded/incorporated into the bottom wall of the rigid casing at the tip of the boot, and is finally shaped so as to emerge/surface outside the rigid casing, at the two lateral sides of the tip of the shell.

Unfortunately, the elastomeric material used for making the sole is chemically inconsistent with the plastic material used for making the rigid casing, so the attachment of the sole to the bottom wall of the rigid casing is a relatively long and laborious operation, which requires the use of particularly expensive, chemical catalysts and special glues, with the considerable costs that this entails.

Aim of the present invention is to reduce the costs for producing ski-mountaineering boots.

In compliance with the above aims, according to the present invention there is provided a ski-boot production method as specified in Claim 1 and, preferably, though not necessarily, in any one of the claims dependent thereon.

The present invention will now be described with reference to the appended drawings, illustrating a nonlimiting embodiment, wherein:
- Figure 1 is a side view of a ski-mountaineering boot realized according to the teachings of the present invention;
- Figure 2 is a perspective view of the shell of the ski-mountaineering boot shown in Figure 1;
- Figures 3 to 8 schematically depict an equal number of steps of the production method of the shell shown in Figure 2;
- Figure 9 shows a different embodiment of the shell of the ski-mountaineering boot shown in Figure 1; whereas
- Figures 10, 11 and 12 schematically depict some of the steps of the production method of the shell shown in Figure 9.

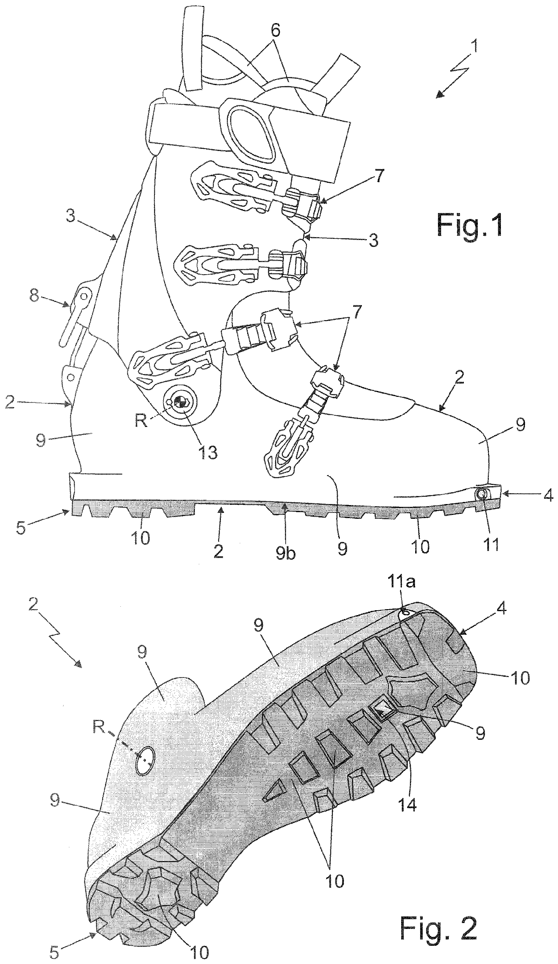

With reference to Figures 1 and 2, reference number 1 denotes as a whole a ski boot and in particular a ski boot specifically structured for practicing ski-mountaineering.

Firstly, ski boot 1 comprises: a rigid shell 2 which is substantially shoe-shaped so as to accommodate the foot of the user, and has the lower part specifically structured /shaped for coupling/fastening in a rigid and stable, though easily releasable manner, to a ski-binding device (not shown) of known type which, in turn, is adapted to be fixed in rigid manner onto the back of a generic downhill ski or similar; and a rigid cuff 3 which is shaped so as to enclose the lower part of the leg of the user, and is hinged onto the upper part of shell 2 so as to be able to freely swing about a transversal rotation axis R, which is locally substantially perpendicular to the vertical midplane of the boot and which also substantially coincides with the articulation axis of the user's ankle.

More in detail, the lower part of shell 2 is provided with a front tip 4 and a rear heel 5. The front tip 4 is preferably structured so as to be able to couple/fasten in a stable, though easily releasable manner, to the toe-piece (not shown) of a ski-binding device which, in turn, is stably fixed onto the back of a generic downhill ski or similar.

The rear heel 5, on the other hand, is preferably structured so as to be able to couple/fasten in a stable, though easily releasable manner, to the heel-piece (not shown) of the same ski-binding device which, in turn, is stably fixed onto the back of a generic downhill ski or similar.

Preferably, the lower part of shell 2 additionally has a treaded profile so as to grip on snow or ice and thus allow the user to nearly safety walk on snow and ice.

In the example shown, in particular, the front tip 4 of shell 2 is preferably structured so as to be able to couple/fasten in known manner to the toe-piece of a ski-mountaineering binding device; whereas the rear heel 5 of shell 2 is preferably structured so as to couple/fasten in known manner to the heel-piece of the same ski-mountaineering binding device.

With reference to Figure 1, additionally the ski boot 1 also comprises: an inner-boot 6 which is shaped so as to accommodate and protect at least the foot of the user and is inserted into the shell 2 and, optionally, also into the cuff 3, preferably in a manually removable manner; and a series of manually-operated closing devices 7 which are suitably distributed on shell 2 and/or on cuff 3 and are structured so as to be able to selectively close/tighten the shell 2 or the cuff 3 on the leg of the user, so as to be able to stably immobilize the leg of the user within the ski boot 1, or rather, the inner-boot 6.

More in detail, in the example shown, the inner-boot 6 has a soft, thermal-insulating structure, optionally also of a thermo-formable type, and it is preferably shaped so as to accommodate the foot and the lower part of the leg of the user approximately up to the top of the calf. In turn, the closing devices 7 preferably consist of a series of lever buckles located over the shell 2 or cuff 3, so as to be able to selectively close/tighten the shell 2 or the cuff 3 against the foot of the user or leg.

Preferably, the ski boot 1 is moreover provided with an automatic or manually operated, cuff locking device 8 which is preferably arranged astride the shell 2 and the cuff 3 in the area above the heel of the boot, and is structured so as to be able to selectively connect the cuff 3 in rigid manner to the shell 2, so as to prevent the cuff 3 from freely swinging about the rotation axis R.

More in detail, the cuff locking device 8 is preferably structured so as to be able to, selectively and alternatively,
- secure the cuff 3 in rigid manner to the shell 2 in a given descent position, in which the cuff 3 is inclined forward with respect to the vertical by a predetermined angle preferably, though not necessarily, ranging between 3° and 30°, so as to prevent any swinging movement of the cuff 3 on the shell 2; and
- completely unlock/release the cuff 3 from the shell 2 so as to allow the cuff 3 to freely swing backward and forward on the shell 2 about the rotation axis R, while remaining on the midplane of the boot.

With reference to Figures 1 and 2, in turn, shell 2 comprises: a substantially basin-shaped rigid casing 9, which is made of rigid thermoplastic material, and is shaped so as to accommodate, enclose and protect the foot of the user approximately up to the height of the ankle; and also a lower sole 10, preferably with a treaded profile, which is made of elastomeric-type thermoplastic material with a high coefficient of friction, and is placed on the bottom wall 9b of rigid casing 9 preferably substantially covering the whole bottom wall 9b.

Preferably, the thermoplastic material forming the sole 10 additionally has a density and/or surface hardness lower than those of the thermoplastic material forming the rigid casing 9.

Additionally, the rigid casing 9 is made by injection molding directly over the sole 10 that, preferably, has been in turn molded beforehand, by means of a different injection molding process.

In other words, the thermoplastic material forming the rigid casing 9 is over-injected directly onto the sole 10.

Preferably, the thermoplastic material forming the rigid casing 9 additionally has a melting temperature higher than that of the thermoplastic material forming the sole 10.

More in detail, the thermoplastic material forming the rigid casing 9 is preferably a poly[ether block amide] (PEBA) .

In other words, the thermoplastic material forming the rigid casing 9 is preferably a block copolymer (i.e. a polymeric material in which the polymeric chain is composed of a sequence of two or more molecular units of monomers of different types, which alternate in a more or less regular manner), wherein the polymeric chain is composed of a sequence of polyether molecules and polyamide molecules alternating to one another in a more or less regular manner.

The poly[ether block amide] (PEBA) is also known by the names VESTAMID or PEBAX.

Preferably, the thermoplastic material forming the rigid casing 9 moreover has a density higher than 1,02 g/cm³ (grams per cubic centimeter) and/or a hardness higher than 60 ShoreD.

In turn, the thermoplastic material forming the sole 10 is preferably a thermoplastic polyurethane (TPU) optionally modified preferably with polyether- or polyester- based, thermoplastic rubbers.

Preferably, the thermoplastic material forming the sole 10 additionally has a density lower than 1,01 g/cm³ (grams per cubic centimeter) and/or a hardness higher than 60 ShoreA.

In the example shown, in particular, the rigid casing 9 is preferably made of a PA6 polyamide-based, or a PA66 polyamide-based, or a mixture of PA6 polyamide and PA66 polyamide-based, poly [ether block amide] (PEBA).

Alternatively, the rigid casing 9 could be made of PA11 polyamide-based, or PA12 polyamide-based, or a mixture of PA11 polyamide and PA12 polyamide-based, poly [ether block amide] (PEBA).

On the other hand, the sole 10 is preferably made of pure thermoplastic polyurethane (TPU), preferably with a surface hardness equal to about 85 ShoreA.

With reference to Figures 1, 2 and 4, preferably the shell 2 moreover comprises a rigid front insert 11, which is preferably made of metal material, is stably embedded/ incorporated into the bottom wall 9b of rigid casing 9, more or less at the tip 4 of shell 2, and is structured so as to surface/emerge outside the rigid casing 9, in a substantially specular position, on opposite sides of the midplane of the boot, so that the two distal ends 11a of the rigid insert 11 can freely couple/fasten to the toe-piece of the ski-mountaineering binding device.

Preferably, the rigid front insert 11 additionally has a substantially plate-like structure and is arranged locally substantially coplanar to the bottom wall 9b of rigid casing 9.

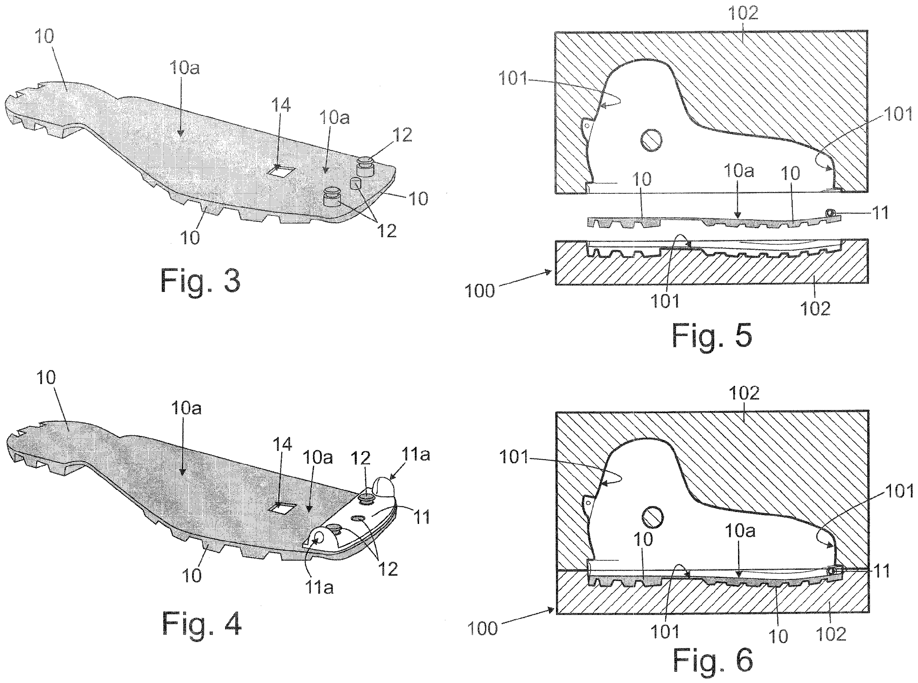

With reference to Figure 3, moreover in the example shown the rigid front insert 11 is preferably stably fixed spaced above the upper face 10a of the sole 10.

More in detail, the rigid front insert 11 is preferably fitted and stably secured onto at least one, and preferably a plurality of fixing protrusions 12 that jut out from the upper face 10a of sole 10, preferably in a direction locally substantially perpendicular to the surface of the same upper face 10a.

With reference to Figures 1, 2 and 4, in the example shown, in particular, rigid casing 9 is preferably provided with a substantially U-shape protruding lip or ledge that juts out from the front part of casing 9 while remaining locally substantially coplanar to the bottom wall 9b of casing 9, and surrounds the phalangeal region of the sole of the foot so as to form the tip 4 of shell 2.

The rigid front insert 11 is preferably embedded inside the bottom wall 9b of the rigid casing 9 in the area surrounded by the protruding lip, so that its two distal ends 11a emerge/surface outside the rigid casing 9 at the two lateral sides of the lip, preferably in a substantially specular position on opposite sides of the midplane of the boot.

In the example shown, furthermore, the sole 10 is preferably provided with a plurality of preferably substantially cylindrical in shape, centering and supporting pins 12 which are located at the phalangeal region of the sole of the foot, and which jut out from the upper face 10a of sole 10, perpendicular to the surface of the face.

The rigid front insert 11 is preferably force fitted directly onto the distal ends of the centering and supporting pins 12.

With reference to Figure 1, preferably the cuff 3 in turn basically consists of rigid casing made of plastic and/or composite material, which is substantially C-folded so as to cover the rear part of the leg of the user, from the ankle substantially up to the height of the calf, and which is moreover provided with two lateral oblong flaps that prolong forward on opposite sides of the midplane of the boot, so as to embrace the leg of the user from behind more or less at the height of the calf and then overlap each other at the front part of the leg, thus forming a tubular structure that encloses the leg of the user at the height of the calf.

Additionally, cuff 3 is preferably fixed in a freely rotatable manner onto the upper part of shell 2, or rather of rigid casing 9, by means of two connecting hinges 13 that are preferably made of metal material and located on the internal and external lateral sides of shell 2 and cuff 3, aligned along axis R, so as to allow the cuff 3 to freely swing onto shell 2 backwards and forwards, while remaining on a reference plane orthogonal to axis R and substantially coinciding with the midplane of the boot.

Working of ski boot 1 is easy inferable from what written above and requires no further explanations.

With reference to Figures from 3 and 8, the production method of ski boot 1 comprises, in sequence, the steps of:
- separately realizing the sole 10 of shell 2 in a first thermoplastic material;
- inserting the sole 10 inside a mold 100 for the injection molding of plastic material, which is internally provided with a closed cavity 101 that copies in negative the shape of the rigid shell 2 to be realized;
- injecting a second thermoplastic material inside the closed cavity 101 that already accommodates the sole 10, so that such first thermoplastic material can overlap the sole 10 and, at the same time, fill the remaining empty space, so as to form the rigid casing 9 of the shell 2 and detachably joining the same casing to the sole 10; and finally
- extracting the resulting shell 2 from the mold 100. Preferably, the second thermoplastic material moreover has a melting temperature higher than that of the first thermoplastic material.

Preferably, the second thermoplastic material also has a density and/or surface hardness higher than those of the first thermoplastic material.

Preferably, the first thermoplastic material is a thermoplastic polyurethane (TPU), optionally modified with preferably polyether- or polyester- based, thermoplastic rubbers.

Preferably the second thermoplastic material, on the other hand, is a poly [ether block amide] (PEBA).

Additionally, the sole 10 is preferably separately made by means of a special injection molding process inside a second mold for the injection molding of plastic material.

More in detail, sole 10 of shell 2 is preferably made via an injection molding process separate and different to that of rigid casing 9, and which comprises, in sequence, the steps of:
- injecting the first thermoplastic material, i.e. the thermoplastic polyurethane (TPU) optionally modified with preferably polyether- or polyester-based, thermoplastic rubbers, inside a second mold for the injection molding of plastic material (not shown), which is internally provided with a closed cavity that copies in negative the shape of the sole 10 to be realized, so as to form the sole 10; and finally
- extracting the resulting sole 10 from the mold.

Preferably, the sole 10 is moreover made in a single piece.

Preferably, before placing the sole 10 inside the mold 100, the production method of ski boot 1 additionally comprises the step of stably fixing the rigid insert 11 onto the sole 10, so that the rigid insert 11 is subsequently covered by the second thermoplastic material.

More in detail, the production method of ski boot 1 preferably provided to stably fix the rigid insert 11 onto the sole 10, spaced above the exposed or upper face 10a of sole 10, and then inserting the sole 10 inside the closed cavity 101.

Preferably, the step of stably fixing the rigid insert 11 onto the exposed or upper face 10a of the sole 10 moreover provides to stably fit and secure the rigid insert 11 onto the fixing protrusion (s) 12, or rather onto the centering and support pins 12 sticking out from the exposed or upper face 10a of sole 10.

In other words, with reference to Figures 3, 4 and 5, the production method of ski boot 1 preferably comprises the steps of:
- separately realizing the sole 10 of rigid shell 2, preferably via an injection molding process;
- fixing the rigid insert 11 in stable manner onto the exposed or upper face 10a of the sole 10, preferably force fitting the rigid insert 11 onto the fixing protrusion(s) 12 sticking out from the exposed or upper face 10a of sole 10; and then
- placing the sole 10 with the rigid insert 11 between the mold-halves 102 of a mold 100 for injection molding of plastic material, wherein the mold-halves 102 are specifically shaped to be mutually coupled, while forming/delimiting, in the area of mutual contact, a closed cavity 101 that copies in negative the shape of the rigid shell 2 to be realized.

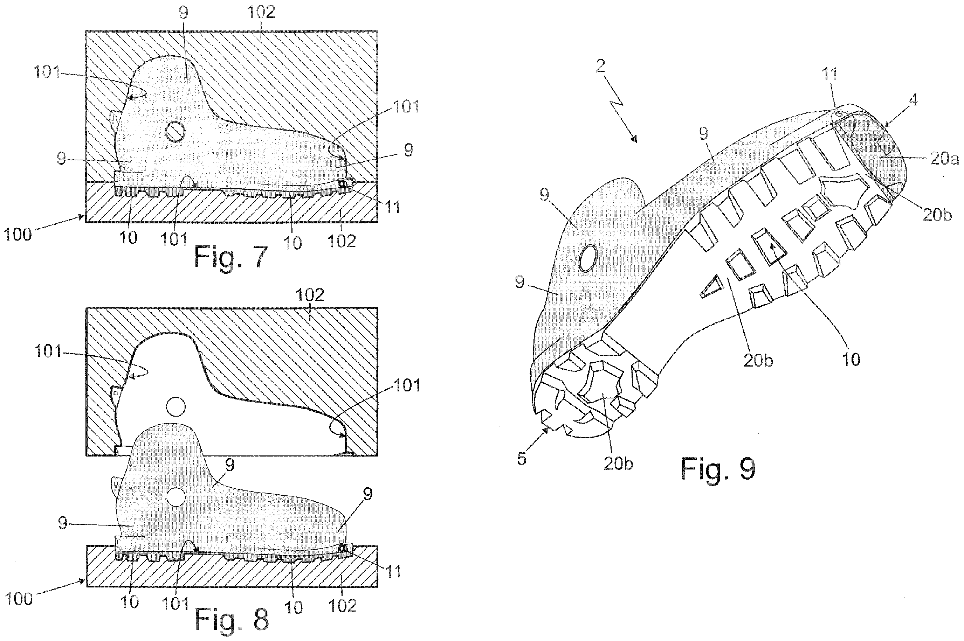

With reference to Figures 6 and 7, after placing the sole 10 and the rigid insert 11 between the mold-halves 102, the production method of ski boot 1 preferably comprises the steps of:
- coupling the mold-halves 102 to each other, so as to compose/close the mold 100 and trap the sole 10 with the rigid insert 11 inside the closed cavity 101; and then
- injecting the second thermoplastic material inside the closed cavity 101 that already accommodates the sole 10 and the rigid insert 11, so that such material can directly overlap the surface of the exposed or upper face 10a of the sole 10 and, at the same time, fill the remaining empty space.

With reference to Figure 2 and 7, preferably the injection of the second thermoplastic material inside the closed cavity 101 moreover takes place through a through-opening 14 formed directly in the sole 10, preferably at the tarsus-phalangeal region of the sole of the foot.

In other words, the mold 100 is structured so that the injection point is located at the through-opening 14 of the sole 10.

With reference to Figure 8, after injecting the second thermoplastic material inside the closed cavity 101, the production method of ski boot 1 finally comprises the steps of:
- solidifying the second thermoplastic material present in the closed cavity 101, so as to make the rigid casing 9 of shell 2 and, at the same time, stably joining the rigid casing 9 to the sole 10; and finally
- separating the mold-halves 102 and removing the resulting rigid shell 2 from the mold 100.

The production method of ski boot 1 described above offers several advantages.

The over-injection of rigid casing 9 directly onto the lower sole 10 allows to eliminate the use of glues, and to considerably reduce the production times of shell 2.

Additionally, the fixing of the rigid front insert 11 directly onto sole 10, before placing the sole 10 inside the mold 100, greatly simplifies the subsequent step of injection molding, because the sole 10 is a component much larger and easier to handle than the sole rigid insert 11, and therefore it can be placed inside the mold 100 more quickly and more easily than the sole rigid front insert 11.

Furthermore, the particular choice of the thermoplastic materials allows the rigid casing 9 to be unmovably joined to the sole 10.

Finally, it is clear that modifications and variations can be made to the ski boot 1 and to the production method described above without however departing from the scope of the present invention.

For example, with reference to Figure 9, instead of being made in a single piece, the sole 10 of shell 2 can be subdivided into a front plate-like segment 20a and a rear plate-like segment 20b separate and complementary to each other.

Preferably, the front segment 20a covers the zone/area of the bottom wall 9b of rigid casing 9 located beneath the phalangeal region of the sole of the foot of the user, and it is preferably provided with the centering and support pins 12 onto which the rigid insert 11 is to be force fitted.

Also in this case, the rigid casing 9 is made via injection molding directly onto the front segment 20a of sole 10.

In other words, the thermoplastic material forming the rigid casing 9 is over-injected directly onto the front segment 20a of sole 10 which, in turn, has been separately made preferably via a different injection molding process.

In other words, the front segment 20a of sole 10 is preferably made separately via a specific injection molding process inside a second mold for the injection molding of plastic material.

The rigid casing 9 is preferably made of poly [ether block amide] (PEBA), whereas the front segment 20a of sole 10 is preferably made of thermoplastic polyurethane (TPU), optionally modified with preferably polyether- or polyester- based, thermoplastic rubbers.

Preferably, on the other hand, the rear segment 20b of sole 10 covers the zone/area of the bottom wall 9b of rigid casing 9 below the metatarsal region, the arch region and the astragalus-calcaneal region of the sole of the foot, and it is preferably made of vulcanized rubber or other similar elastomeric material, with a high coefficient of friction.

Preferably, the rear segment 20b of sole 10 is moreover directly fixed onto the bottom wall 9b of the casing by gluing.

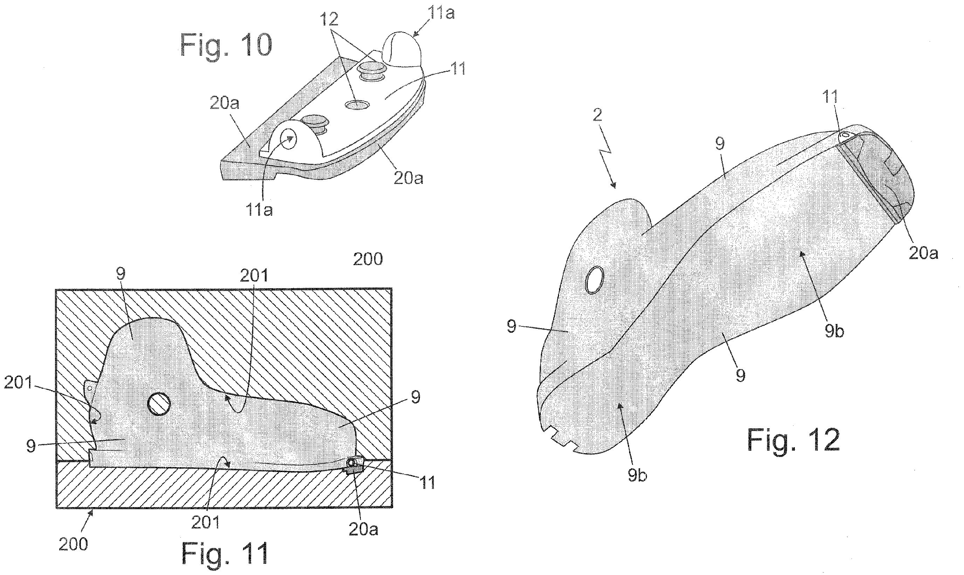

With reference to Figures 10, 11 and 12, in this second embodiment, the production method of ski boot 1 thus comprises the steps of:
- separately realizing the front segment 20a of the sole 10 of the rigid shell 2 in a first thermoplastic material, preferably via an injection molding process;
- inserting the front segment 20a of the sole 10 inside a mold 200 for injection molding of plastic material, which is internally provided with a closed cavity 201 that copies in negative the shape of the rigid shell 2 to be realized, which the exclusion of the rear segment 20b of sole 10;
- injecting a second thermoplastic material inside the closed cavity 201 that already accommodates the front segment 20a of sole 10, so that such material can overlap the front segment 20a of the sole 10 and, at the same time, fill the remaining empty space, so as to form the rigid casing 9 of the shell 2 and to unmovably join the shell to the front segment 20a;
- extracting the resulting piece from the mold 100.

Additionally, the production method of ski boot 1 moreover comprises the steps of:
- separately realizing also the rear segment 20b of the sole 10 of the rigid shell 2, preferably via an injection molding process; then
- gluing the rear segment 20b of the sole 10 onto the bottom wall 9b of rigid casing 9, so as to obtain the rigid shell 2.

Preferably, the first thermoplastic material is still a thermoplastic polyurethane (TPU) optionally modified with preferably polyether- or polyester- based, thermoplastic rubbers.

Preferably, the second thermoplastic material is still a poly [ether block amide] (PEBA).

Preferably, before placing the front segment 20a of sole 10 inside the mold 200, the production method of ski boot 1 comprises the step of stably fixing the rigid insert 11 onto the front segment 20a of sole 10, so that the rigid insert 11 is subsequently covered by the second thermoplastic material.

Finally, in a different embodiment the sole 10 or the front segment 20a of sole 10 can eventually be made of a second block-copolymer of an elastomeric type, wherein the polymeric chain is formed by two or more monomers of different types and at least one of these monomers is also present in the polymeric chain of the block-copolymer forming the rigid casing 9.

## Claims

1. A production method of a ski-boot (1) comprising a substantially shoe-shaped rigid shell (2) adapted to accommodate the foot of the user and which comprises: a rigid casing (9) shaped so as to accommodate and enclose the foot of the user, and a sole (10) which is arranged to cover the bottom wall (9b) of the rigid casing (9) and comprises at least one front plate-like portion (10, 20a) and a rear plate-like portion (10, 20b);
the production method of the ski-boot (1) **being characterized by** comprising the steps of:
- realizing at least the front plate-like portion (10, 20a) of the sole (10) of the rigid shell (2) in a first thermoplastic material;
- inserting the front plate-like portion (10, 20a) of the sole (10) inside a first mold (100, 200) for the injection molding of plastic material, which is internally provided with a closed cavity (101, 201) that substantially copies in negative the shape of the rigid shell (2) to be realized;
- injecting a second thermoplastic material inside the closed cavity (101, 201) that already accommodates the front plate-like portion (10, 20a) of the sole (10), so that the second thermoplastic material can overlap the front plate-like portion (10, 20a) and fill the remaining empty space, so as to form the rigid casing (9) of the rigid shell (2); and finally
- extracting the resulting piece from the mold (100).

2. Production method according to Claim 1, **characterized in that** said front plate-like portion (10, 20a) of the sole (10) is formed separately, by means of an injection molding process inside a second mold for the injection molding of plastic material.

3. Production method according to Claim 1 or 2, **characterized in that** the first thermoplastic material is a thermoplastic polyurethane.

4. Production method according to Claim 3, wherein the thermoplastic polyurethane is modified with polyether- or polyester- based, thermoplastic rubbers.

5. Production method according to any one of the preceding claims, **characterized in that** the second thermoplastic material is a poly [ether block amide].

6. Production method according to any one of the preceding claims, **characterized in that** the second thermoplastic material has a melting temperature higher than that of the first thermoplastic material.

7. Production method according to any one of the preceding claims, **characterized in that** the second thermoplastic material has a density and/or a surface hardness higher than those of the first thermoplastic material.

8. Production method according to any one of the preceding claims, wherein the rigid shell (2) additionally comprises a rigid insert (11) which is embedded/ incorporated into the bottom wall (9b) of the rigid casing (9) substantially at the tip of the shell (4), and the production method is **characterized by** comprising, before placing the front plate-like portion (10, 20a) of the sole (10) inside the closed cavity (101, 201) of the first mold (100, 200), also the step of fixing said rigid insert (11) in a stable manner onto the front plate-like portion (10, 20a) of said sole (10).

9. Production method according to Claim 8, **characterized in that** the rigid insert (11) is fixed in a stable manner onto the front plate-like portion (10, 20a) of the sole (10) spaced above an exposed or upper face (10a) of the sole (10).

10. Production method according to claim 8 or 9, **characterized in that** the step of fixing the rigid insert (11) in stable manner onto said front plate-like portion (10, 20a) of the sole (10) comprises the step of fitting and securing in stable manner said rigid insert (11) on at least one fixing protrusion (12) that juts out from said exposed or upper face (10a) of the front plate-like portion (10, 20a) of the sole (10).

11. Production method according to any one of the preceding claims, **characterized in that** the front plate-like portion (10, 20a) of the sole (10) covers the area of the bottom wall (9b) of the rigid casing (9) underneath the phalangeal region of the sole of the foot.

12. Production method according to any one of the preceding claims, **characterized in that** the front plate-like portion (10, 20a) and the rear plate-like portion (10, 20b) of the sole (10) form a single piece.

13. Production method according to any one of the preceding claims, **characterized in that** the second thermoplastic material is injected inside the closed cavity (101) through a through-opening (14) formed in the sole (10), preferably at the tarsus-phalangeal region of the sole of the foot.

14. A ski-boot (1) comprising a substantially shoe-shaped rigid shell (2) which is adapted to accommodate the foot of the user and has the lower part structured to fasten with a ski-binding device or the like; a rigid cuff (3) which is adapted to enclose the leg of the user, and is pivotally joined onto the rigid shell (2), so as to be able to swing around a rotation axis (R) substantially perpendicular to the midplane of the boot; and closing means (7) adapted to selectively tighten the rigid shell (2) and the cuff (3) against the foot of the user;
the rigid shell (2) comprising: a substantially basin-shaped, rigid casing (9) which is made of thermoplastic material and is shaped so as to accommodate and enclose the foot of the user, and a sole (10) arranged to cover the bottom wall (9b) of the rigid casing (9);
the ski-boot (1) being **characterized in that** the sole (10) comprises at least one front plate-like portion (20a) made of a thermoplastic material of elastomeric type, and **in that** the rigid casing (9) is overmolded directly onto said front plate-like portion (20a) of the sole (10).

15. The ski-boot according to claim 14, **characterized in that** the rigid casing (9) is made of poly [ether block amide], and **in that** at least the front plate-like portion (10, 20a) of the sole (10) is made of a thermoplastic polyurethane, optionally modified with polyether- or polyester- based, thermoplastic rubbers.

## Patentansprüche

1. Herstellungsverfahren eines Skischuhs (1) umfassend eine im Wesentlichen schuhförmige starre Schale (2), die derart angepasst ist, dass sie den Fuß des Benutzers aufnimmt und welche umfasst: ein starres Gehäuse (9), das derart geformt ist, dass es den Fuß des Benutzers aufnimmt und umschließt, und eine Sohle (10), welche derart angeordnet ist, dass sie die Bodenwand (9b) des starren Gehäuses (9) abdeckt und mindestens einen vorderen plattenartigen Abschnitt (10, 20a) und einen hinteren plattenartigen Abschnitt (10, 20b) umfasst;
wobei das Herstellungsverfahren des Skischuhs (1) **dadurch gekennzeichnet ist, dass** es die folgenden Schritte umfasst:
- Realisieren mindestens des vorderen plattenartigen Abschnitts (10, 20a) der Sohle (10) der starren Schale (2) aus einem ersten thermoplastischen Material;
- Einsetzen des vorderen plattenartigen Abschnitts (10, 20a) der Sohle (10) in eine erste Form (100, 200) für das Spritzgießen von Kunststoffmaterial, welche innen mit einem geschlossenen Hohlraum (101, 201) versehen ist, der die Form der zu realisierenden starren Schale (2) als Negativ im Wesentlichen kopiert;
- Einspritzen eines zweiten thermoplastischen Materials in den geschlossenen Hohlraum (101, 201), der bereits den vorderen plattenartigen Abschnitt (10, 20a) der Sohle (10) aufnimmt, sodass das zweite thermoplastische Material den vorderen plattenartigen Abschnitt (10, 20a) überlappen und den verbleibenden leeren Raum füllen kann, um so das starre Gehäuse (9) der starren Schale (2) zu bilden; und schließlich
- Extrahieren des resultierenden Stücks aus der Form (100).

2. Herstellungsverfahren nach Anspruch 1, **dadurch gekennzeichnet, dass** der besagte vordere plattenartige Abschnitt (10, 20a) der Sohle (10) separat mittels eines Spritzgussverfahrens innerhalb einer zweiten Form zum Spritzgießen von Kunststoffmaterial gebildet wird.

3. Herstellungsverfahren nach Anspruch 1 oder 2, **dadurch gekennzeichnet, dass** das erste thermoplastische Material ein thermoplastisches Polyurethan ist.

4. Herstellungsverfahren nach Anspruch 3, wobei das thermoplastische Polyurethan mit thermoplastischen Kautschuken auf Polyether- oder Polyesterbasis modifiziert wird.

5. Herstellungsverfahren nach einem der vorhergehenden Ansprüche, **dadurch gekennzeichnet, dass** das zweite thermoplastische Material ein Poly[etherblockamid] ist.

6. Herstellungsverfahren nach einem der vorhergehenden Ansprüche, **dadurch gekennzeichnet, dass** das zweite thermoplastische Material eine höhere Schmelztemperatur aufweist als das erste thermoplastische Material.

7. Herstellungsverfahren nach einem der vorhergehenden Ansprüche, **dadurch gekennzeichnet, dass** das zweite thermoplastische Material eine Dichte und/oder eine Oberflächenhärte aufweist, die höher ist als die des ersten thermoplastischen Materials.

8. Herstellungsverfahren nach einem der vorhergehenden Ansprüche, wobei die starre Schale (2) zusätzlich einen starren Einsatz (11) umfasst, welcher in die Bodenwand (9b) des starren Gehäuses (9) im Wesentlichen an der Spitze der Schale (4) eingebettet/integriert ist, und das Herstellungsverfahren **dadurch gekennzeichnet ist, dass** es, bevor der vordere plattenartige Abschnitt (10, 20a) der Sohle (10) innerhalb des geschlossenen Hohlraums (101, 201) der ersten Form (100, 200) platziert wird, auch den Schritt des stabilen Fixierens des besagten starren Einsatzes (11) auf dem vorderen plattenartigen Abschnitt (10, 20a) der besagten Sohle (10) umfasst.

9. Herstellungsverfahren nach Anspruch 8, **dadurch gekennzeichnet, dass** der starre Einsatz (11) stabil auf dem vorderen plattenartigen Abschnitt (10, 20a) der Sohle (10) fixiert wird, der über einer exponierten oder oberen Fläche (10a) der Sohle (10) angeordnet ist.

10. Herstellungsverfahren nach Anspruch 8 oder 9, **dadurch gekennzeichnet, dass** der Schritt des stabilen Fixierens des starren Einsatzes (11) auf dem besagten vorderen plattenartigen Abschnitt (10, 20a) der Sohle (10) den Schritt des stabilen Anbringens und Sicherns des besagten starren Einsatzes (11) an mindestens einem Fixierungsvorsprung (12) umfasst, der aus der besagten exponierten oder oberen Fläche (10a) des vorderen plattenartigen Abschnitts (10, 20a) der Sohle (10) herausragt.

11. Herstellungsverfahren nach einem der vorhergehenden Ansprüche, **dadurch gekennzeichnet, dass** der vordere plattenartige Abschnitt (10, 20a) der Sohle (10) den Bereich der Bodenwand (9b) des starren Gehäuses (9) unterhalb des phalangealen Bereichs der Fußsohle abdeckt.

12. Herstellungsverfahren nach einem der vorhergehenden Ansprüche, **dadurch gekennzeichnet, dass** der vordere plattenartige Abschnitt (10, 20a) und der hintere plattenartige Abschnitt (10, 20b) der Sohle (10) ein Stück bilden.

13. Herstellungsverfahren nach einem der vorhergehenden Ansprüche, **dadurch gekennzeichnet, dass** das zweite thermoplastische Material innerhalb des geschlossenen Hohlraums (101) durch eine in der Sohle (10) ausgebildete Durchgangsöffnung (14), vorzugsweise im tarsal-phalangealen Bereich der Fußsohle, injiziert wird.

14. Ein Skischuh (1) umfassend eine im Wesentlichen schuhförmige starre Schale (2), welche derart angepasst ist, dass sie den Fuß des Benutzers aufnimmt und den unteren Teil strukturiert aufweist, um mit einer Skibindungsvorrichtung oder dergleichen befestigt zu werden; eine starre Manschette (3), welche geeignet ist, das Bein des Benutzers zu umschließen, und schwenkbar mit der starren Schale (2) verbunden ist, um um eine Drehachse (R) schwenken zu können, die im Wesentlichen senkrecht zur Mittelebene des Schuhs verläuft; und Verschlussmittel (7), die geeignet sind, die starre Schale (2) und die Manschette (3) selektiv gegen den Fuß des Benutzers anzuziehen;
wobei die starre Schale (2) umfasst: ein im Wesentlichen beckenförmiges, starres Gehäuse (9), welches aus thermoplastischem Material hergestellt und derart geformt ist, dass es den Fuß des Benutzers aufnimmt und umschließt, und eine Sohle (10), die derart angeordnet ist, dass sie die Bodenwand (9b) des starren Gehäuses (9) bedeckt;
wobei der Skischuh (1) **dadurch gekennzeichnet ist, dass** die Sohle (10) mindestens einen vorderen plattenartigen Abschnitt (20a) aus einem thermoplastischen Material vom Elastomertyp umfasst, und dass das starre Gehäuse (9) direkt auf den besagten vorderen plattenartigen Abschnitt (20a) der Sohle (10) umspritzt ist.

15. Der Skischuh nach Anspruch 14, **dadurch gekennzeichnet, dass** das starre Gehäuse (9) aus Poly[etherblockamid] besteht und dass mindestens der vordere plattenartige Abschnitt (10, 20a) der Sohle (10) aus einem thermoplastischen Polyurethan besteht, das optional mit thermoplastischen Kautschuken auf Polyether- oder Polyesterbasis modifiziert ist.

## Revendications

1. Procédé de production d'une botte de ski (1) comprenant une coque rigide sensiblement en forme de chaussure (2) adaptée pour loger le pied de l'utilisateur et qui comprend : une enveloppe rigide (9) formée de façon à loger et renfermer le pied de l'utilisateur, et une semelle (10) qui est agencée pour couvrir la paroi de dessous (9b) de l'enveloppe rigide (9) et comprend au moins une portion de type plaque avant (10, 20a) et une portion de type plaque arrière (10, 20b) ;
le procédé de production de la botte de ski (1) étant **caractérisé en ce qu'**il comprend les étapes de :
- réalisation au moins de la portion de type plaque avant (10, 20a) de la semelle (10) de la coque rigide (2) dans un premier matériau thermoplastique ;
- insertion de la portion de type plaque avant (10, 20a) de la semelle (10) à l'intérieur d'un premier moule (100, 200) pour le moulage par injection de matériau plastique, qui est pourvu à l'intérieur d'une cavité fermée (101, 201) qui copie sensiblement en négatif la forme de la coque rigide (2) à réaliser;
- injection d'un deuxième matériau thermoplastique à l'intérieur de la cavité fermée (101, 201) qui loge déjà la portion de type plaque avant (10, 20a) de la semelle (10), de sorte que le deuxième matériau thermoplastique puisse chevaucher la portion de type plaque avant (10, 20a) et remplir l'espace vide restant, de façon à former l'enveloppe rigide (9) de la coque rigide (2) ; et enfin
- extraction de la pièce résultante du moule (100).

2. Procédé de production selon la revendication 1, **caractérisé en ce que** ladite portion de type plaque avant (10, 20a) de la semelle (10) est formée séparément, au moyen d'un processus de moulage par injection à l'intérieur d'un deuxième moule pour le moulage par injection de matériau plastique.

3. Procédé de production selon la revendication 1 ou 2, **caractérisé en ce que** le premier matériau thermoplastique est un polyuréthane thermoplastique.

4. Procédé de production selon la revendication 3, dans lequel le polyuréthane thermoplastique est modifié par des caoutchoucs thermoplastiques à base de polyéther ou de polyester.

5. Procédé de production selon l'une quelconque des revendications précédentes, **caractérisé en ce que** le deuxième matériau thermoplastique est un poly(éther bloc amide).

6. Procédé de production selon l'une quelconque des revendications précédentes, **caractérisé en ce que** le deuxième matériau thermoplastique a une température de fusion plus élevée que celle du premier matériau thermoplastique.

7. Procédé de production selon l'une quelconque des revendications précédentes, **caractérisé en ce que** le deuxième matériau thermoplastique a une masse volumique et/ou une dureté de surface plus élevées que celles du premier matériau thermoplastique.

8. Procédé de production selon l'une quelconque des revendications précédentes, dans lequel la coque rigide (2) comprend en outre une pièce rapportée rigide (11) qui est intégrée à/incorporée dans la paroi de dessous (9b) de l'enveloppe rigide (9) sensiblement au bout de la coque (4), et le procédé de production est **caractérisé en ce qu'**il comprend, avant de placer la portion de type plaque avant (10, 20a) de la semelle (10) à l'intérieur de la cavité fermée (101, 201) du premier moule (100, 200), également l'étape de fixation de ladite pièce rapportée rigide (11) de manière stable sur la portion de type plaque avant (10, 20a) de ladite semelle (10).

9. Procédé de production selon la revendication 8, **caractérisé en ce que** la pièce rapportée rigide (11) est fixée de manière stable sur la portion de type plaque avant (10, 20a) de la semelle (10) espacée au-dessus d'une face supérieure ou exposée (10a) de la semelle (10).

10. Procédé de production selon la revendication 8 ou 9, **caractérisé en ce que** l'étape de fixation de la pièce rapportée rigide (11) de manière stable sur ladite portion de type plaque avant (10, 20a) de la semelle (10) comprend l'étape d'ajustement et d'assujettissement de manière stable de ladite pièce rapportée rigide (11) sur au moins une protubérance de fixation (12) qui fait saillie de ladite face supérieure ou exposée (10a) de la portion de type plaque avant (10, 20a) de la semelle (10).

11. Procédé de production selon l'une quelconque des revendications précédentes, **caractérisé en ce que** la portion de type plaque avant (10, 20a) de la semelle (10) couvre la zone de la paroi de dessous (9b) de l'enveloppe rigide (9) en dessous de la région de phalange de la plante du pied.

12. Procédé de production selon l'une quelconque des revendications précédentes, **caractérisé en ce que** la portion de type plaque avant (10, 20a) et la portion de type plaque arrière (10, 20b) de la semelle (10) forment une seule pièce.

13. Procédé de production selon l'une quelconque des revendications précédentes, **caractérisé en ce que** le deuxième matériau thermoplastique est injecté à l'intérieur de la cavité fermée (101) à travers une ouverture traversante (14) formée dans la semelle (10), de préférence au niveau de la région tarse-phalanges de la plante du pied.

14. Botte de ski (1) comprenant une coque rigide sensiblement en forme de chaussure (2) qui est adaptée pour loger le pied de l'utilisateur et a la partie inférieure structurée pour se fixer avec un dispositif de fixation de ski ou similaire ; un bracelet rigide (3) qui est adapté pour renfermer la jambe de l'utilisateur, et est assemblé en pivotement sur la coque rigide (2), de façon à être capable d'osciller autour d'un axe de rotation (R) sensiblement perpendiculaire au plan milieu de la botte ; et des moyens de fermeture (7) adaptés pour serrer sélectivement la coque rigide (2) et le bracelet (3) contre le pied de l'utilisateur ;
la coque rigide (2) comprenant : une enveloppe rigide sensiblement en forme de cuvette (9) qui est réalisée en matériau thermoplastique et est formée de façon à loger et renfermer le pied de l'utilisateur, et une semelle (10) agencée pour couvrir la paroi de dessous (9b) de l'enveloppe rigide (9) ;
la botte de ski (1) étant **caractérisée en ce que** la semelle (10) comprend au moins une portion de type plaque avant (20a) réalisée en un matériau thermoplastique de type élastomérique, et **en ce que** l'enveloppe rigide (9) est surmoulée directement sur ladite portion de type plaque avant (20a) de la semelle (10).

15. Botte de ski selon la revendication 14, **caractérisée en ce que** l'enveloppe rigide (9) est réalisée en poly(éther bloc amide), et **en ce qu'**au moins la portion de type plaque avant (10, 20a) de la semelle (10) est réalisée en un polyuréthane thermoplastique, facultativement modifié par des caoutchoucs thermoplastiques à base de polyéther ou de polyester.
